# EUROPÄISCHE PATENTSCHRIFT

(11) **EP 1 445 049 B1**
(45) Veröffentlichungstag und Bekanntmachung des Hinweises auf die Patenterteilung: **01.06.2005**
(21) Anmeldenummer: 03002450.9
(22) Anmeldetag: 05.02.2003
(51) Int. Cl.: B23B 27/24

(54) **Rändelwerkzeug**
Knurling tool
Outil de moletage

(43) Veröffentlichungstag der Anmeldung: 11.08.2004
(73) Patentinhaber: Swarovski-Optik KG, 6060 Absam (AT)
(72) Erfinder: Mayr, Werner, 6060 Hall (AT); Erler, Hannes, 6111 Volders (AT)
(74) Vertreter: Torggler, Paul Norbert, Dr.

(56) Entgegenhaltungen:
- DE-B- 1 045 762
- US-A- 5 046 226
- US-A- 5 992 199

## Beschreibung

Die Erfindung betrifft ein Rändelwerkzeug mit einem mindestens ein Rändelrad tragenden Werkzeugkopf, der verstellbar an einem Schaft gelagert ist und mit einer Fixiereinrichtung zum Festlegen der relativen Lage von Werkzeugkopf und Schaft, wobei der Werkzeugkopf am Schaft quer zur Schaftachse linear verschiebbar gelagert ist.

Rändelwerkzeuge mit einem Werkzeugkopf, der verstellbar an einem Schaft gelagert ist, sind bereits bekannt. Ein Beispiel ist im deutschen Patent DE 970 092 gezeigt. Beim Stand der Technik ist der Werkzeugkopf des Rändelwerkzeuges um eine Achse drehbar am Schaft gelagert, um den Werkzeugkopf relativ zum zu bearbeitenden Werkstück ausrichten zu können, wobei der Schaft beispielsweise am Support einer Drehbank oder einer CNC-Maschine eingespannt ist.

Es hat sich gezeigt, dass diese Verstellmöglichkeit des Werkzeugkopfes gegenüber dem Schaft in der Praxis nicht ausreicht, um eine Anpassung an alle Maschinentypen zu erlauben. Vielmehr war es nötig, Rändelwerkzeuge der genannten Gattung mit verschiedenen Schäften herzustellen, um die Einspannsituation bei den gängigsten Maschinentypen abzudecken. Zudem werden bei hohen Belastungen die Erfordernisse einer ausreichenden Formstabilität von Schaft und Werkzeugkopf nur teilweise erfüllt.

Ein Rändetwerkzeug gemäss dem Oberbegriff des Anspruchs 1, bei dem der Werkzeugkopf am Schaft quer zur Schaftachse linear verschiebbar ist, offenbart beispielsweise die US 5,992,199. Der Werkzeugkopf wird durch eine Klemmschraube zusammengepresst, um diesen in seiner Lage am Schaft zu fixieren. Um zusammengepresst werden zu können, muss der Werkzeugkopf eine gewisse Flexibilität aufweisen, was seiner Formstabilität abträglich ist.

Aufgabe der Erfindung ist es, ein Rändelwerkzeug der eingangs genannten Gattung zu schaffen, das bei robustem Aufbau derart verstellbar ist, dass es bei verschiedensten Maschinentypen (beispielsweise bei rechts- und linkslaufenden Maschinen) einsetzbar ist und darüber hinaus eine verbesserte Formstabilität aufweist.

Erfingdungsgemäß wird dies dadurch erreicht, dass die Fixiereinrichtung mindestens einen zwischen Werkzeugkopf und Schaft wirkenden Klemmexzenter aufweist.

Damit kann der Werkzeugkopf in seiner relativen Lage zum Schaft optimal fixiert werden, ohne dass der Werkzeugkopf bzw. der Schaft durch eine Klemmvorrichtung zusammengepresst werden müssen. Beide Bauteilkomponenten können daher - ohne Anordnung eines Klemmspaltes - robuster ausgeführt werden, wodurch sich eine verbesserte Formstabilität des Rändelwerkzeugs ergibt.

Eine besonders präzise Führung ist mittels einer Schwalbenschwanzführung möglich.

Um die relative Lage zwischen Werkzeugkopf und Schaft einstellen zu können, ist eine Verstelleinrichtung, beispielsweise mit einer Verstellschraube, vorgesehen. Die eingestellte Lage kann dann mit der Fixiereinrichtung festgelegt werden.

Weitere Vorteile und Einzelheiten der Erfindung werden anhand der nachfolgenden Figurenbeschreibung näher erläutert.
Die Fig. 1 zeigt eine Seitenansicht auf ein Ausführungsbeispiel eines erfindungsgemäßen Rändel(fräs)werkzeuges,
die Fig. 2 zeigt einen Schnitt gemäß der Linie A-A der Fig. 1,
die Fig. 3 zeigt einen Schnitt gemäß der Linie B-B der Fig. 2,
die Fig. 4 zeigt einen Schnitt gemäß der Linie C-C der Fig. 3,
die Fig. 5 zeigt eine perspektivische Ansicht.

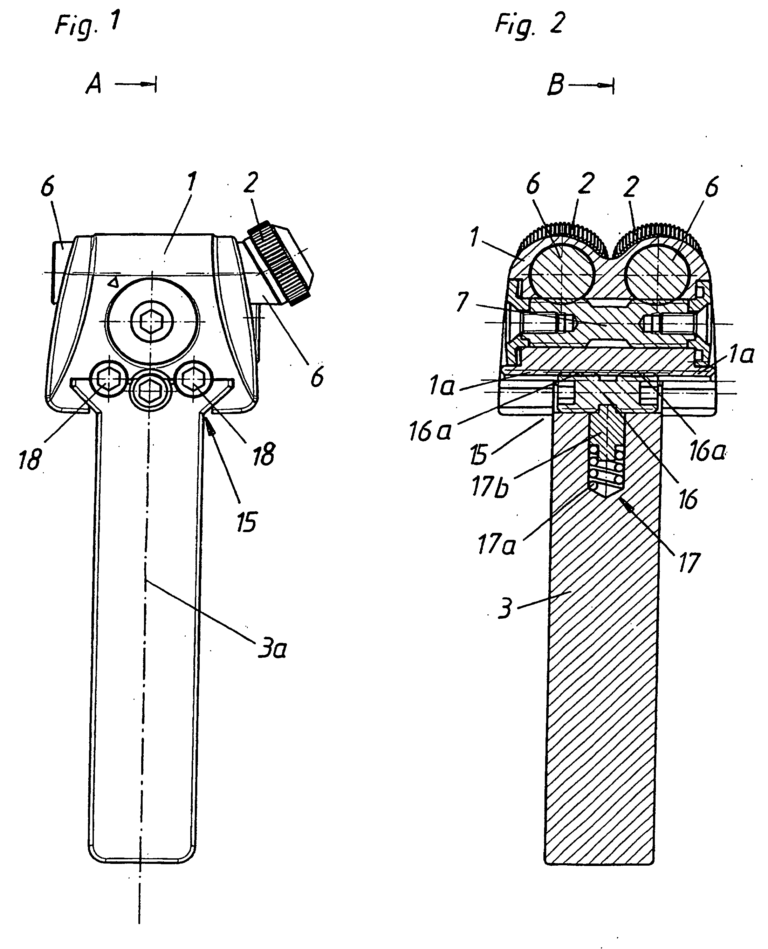

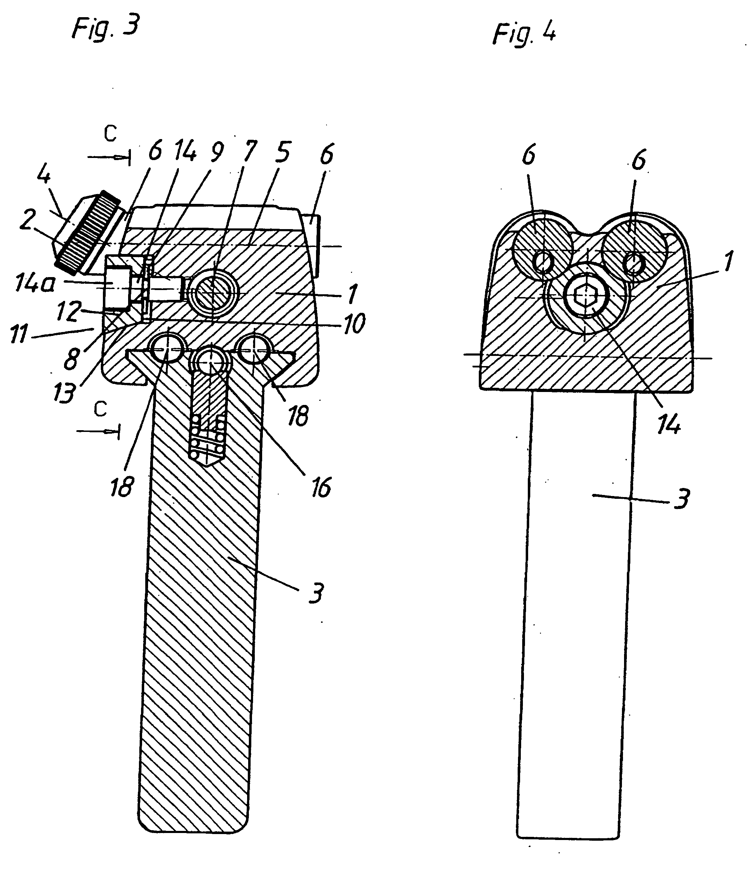

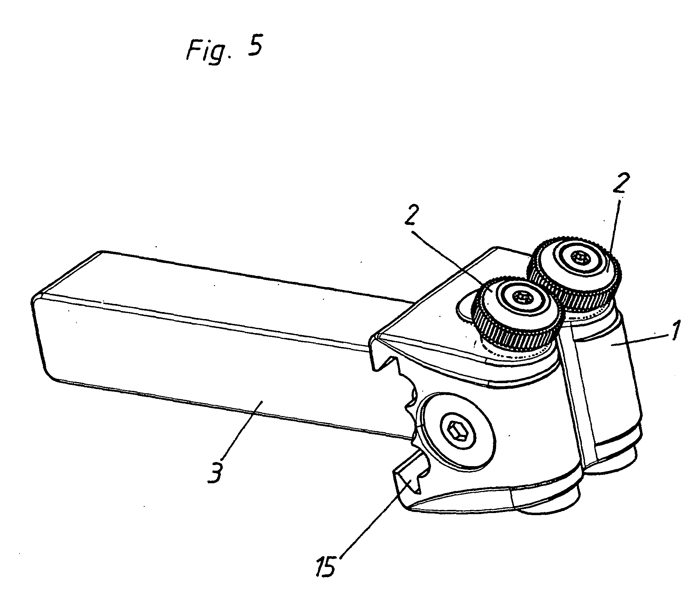

Das in den Fig. 1 bis 5 dargestellte Rändelfräswerkzeug weist einen Werkzeugkopf 1 auf, der zwei Rändelräder 2 trägt. Der Werkzeugkopf 1 ist - wie noch näher erläutert wird - verstellbar am Schaft 3 gelagert.

Jedes der beiden Rändelräder 2 ist um eine Achse 4 frei drehbar an einem Schwenkbolzen 6 gelagert, der wiederum drehbar im Werkzeugkopf 1 gelagert ist. Die beiden Schwenkbolzen 6 können über eine Gewindespindel 7 gemeinsam, aber gegenläufig im Werkzeugkopf 1 verstellt werden, womit der relative Abstand der beiden Rändelräder 2 einstellbar ist. Diese "Synchronverstellung" ist an sich bekannt.

Um die einmal eingestellte Drehlage der Schwenkbolzen 6 um die Achse 5 im Werkzeugkopf 1 festzulegen, ist eine Arretiervorrichtung 11 vorgesehen. Diese weist ein Klemmorgan 12 auf, das sich einerseits auf einer Schrägfläche 13 des Werkzeugkopfes 1 abstützt und andererseits an der Umfangsfläche der Schwenkbolzen 6 anliegt. Bewegt bzw. geklemmt wird dieses Klemmorgan 12 über eine Schraube 14, die in den Werkzeugkopf 1 einschraubbar ist. Beim Einschrauben der Schraube 14 (mit Schraubenkopf 14a) in horizontaler Richtung gemäß den Fig. 1 bis 4 wandert das Klemmorgan 12 durch die Schrägfläche 13 nach oben und klemmt gemeinsam und synchron auf einfache Weise die beiden Schwenkbolzen 6 in der vorher über die Spindelschraube 7 eingestellten Lage fest.

Beim Herausdrehen der Schraube 14 nimmt die in der Nut 8 der Schraube 14 gelagerte Scheibe 9, die an der Hinterseite 10 des Klemmorgans 12 anliegt, das Klemmorgan 12 mit nach außen und löst so aktiv die Klemmung.

Zur Führung des Werkzeugkopfes 1 gegenüber dem Schaft 3 ist eine quer zur Schaftachse 3a verlaufende Linearführung 15 vorgesehen, die beim Ausführungsbeispiel als Schwalbenschwanzführung ausgebildet ist.

Zur Einstellung der relativen Lage vom Werkzeugkopf 1 und Schaft 3 ist als Verstelleinrichtung eine Verstellschraube 16 vorgesehen, die in den Fig. 1 bis 4 in horizontaler Richtung verläuft. Diese Verstellschraube 16 ist im Schaft 3 drehbar aber axial unverschieblich gelagert und greift mit ihren Gewindezügen 16a in entsprechende Gewindezüge 1a am Werkzeugkopf 1 ein. Damit ist eine präzise Verstellung des Werkzeugkopfes 1 gegenüber dem Schaft 3 möglich. Um einen spielfreien Lauf der Gewindezüge 16a der Verstellschraube 16 in den Gewindezügen 1a des Werkzeugkopfes 1 zu ermöglichen, ist eine allgemein mit 17 bezeichnete Vorspanneinrichtung vorgesehen, die die Verstellschraube 16 in die Gewindezüge 1a am Werkzeugkopf 1 drückt. Die Vorspanneinrichtung 17 weist eine Feder 17a und einen Stössel 17b auf.

Nachdem die relative Lage des Werkzeugkopfes 1 zum Schaft 3 über die Verstellschraube 16 eingestellt worden ist, kann man über die Fixiereinrichtung diese eingestellte Lage robust festlegen. Die Fixiereinrichtung besteht beim vorliegenden Ausführungsbeispiel aus zwei im Wesentlichen walzenförmigen Klemmexzentern 18, die auf beiden Seiten der Verstellschraube 16 jeweils in Verstellrichtung verlaufen. Durch Verdrehen dieser Klemmexzenter 18 kommen diese satt am Werkzeugkopf 1 zur Anlage und sorgen damit für eine Verklemmung von Werkzeugkopf 1 und Schaft 3.

Insgesamt lässt sich über das Verstellen der Verstellschraube 16 und anschließenden Drehen der Klemmexzenter 18 auf einfache Weise schnell und präzise die relative Lage des Schaftes 3 zum Werkzeugkopf 1 festlegen. Damit ist eine Anpassung an die verschiedensten Maschinentypen möglich.

Die Erfindung ist selbstverständlich nicht auf die dargestellten Ausführungsbeispiele beschränkt. Beispielsweise kann der Werkzeugkopf 1 auch eine andere Zahl von Rändelrädem 2 aufweisen. Auch die Verstellung und die Anordnung der Rändelräder 2 im Kopf kann variieren. Selbstverständlich sind die Rändelräder 2 bevorzugt austauschbar und können je nach gewünschter Rändelung ausgewechselt werden.

## Patentansprüche

1. Rändelwerkzeug mit einem mindestens ein Rändelrad (2) tragenden Werkzeugkopf (1), der verstellbar an einem Schaft (3) gelagert ist und mit einer Fixiereinrichtung (18) zum Festlegen der relativen Lage von Werkzeugkopf (1) und Schaft (3), wobei der Werkzeugkopf (1) am Schaft (3) quer zur Schaftachse (3a) linear verschiebbar gelagert ist, **dadurch gekennzeichnet, dass** die Fixiereinrichtung (18) mindestens einen zwischen Werkzeugkopf (1) und Schaft (3) wirkenden Klemmexzenter (18) aufweist.

2. Rändelwerkzeug nach Anspruch 1, **dadurch gekennzeichnet, dass** auf beiden Seiten einer Verstelleinrichtung (16) je ein in Verstellrichtung verlaufender, vorzugsweise im Wesentlichen walzenförmiger, Klemmexzenter (18) angeordnet ist.

3. Rändelwerkzeug nach Anspruch 1 oder 2, **dadurch gekennzeichnet, dass** zur Linearführung des Werkzeugkopfes (1) am Schaft (3) eine Schwalbenschwanzführung (15) vorgesehen ist.

4. Rändelwerkzeug nach einem der Ansprüche 1 bis 3, **gekennzeichnet durch** eine vorzugsweise in Verstellrichtung verlaufende Verstellschraube (16) aufweisende Verstelleinrichtung zur Einstellung der relativen Lage von Werkzeugkopf (1) und Schaft (3).

5. Rändelwerkzeug nach Anspruch 4, **dadurch gekennzeichnet, dass** die Verstellschraube (16) drehbar, aber axial unverschieblich im Schaft (3) bzw. Werkzeugkopf gelagert ist und mit ihren Gewindezügen (16a) in entsprechende Gewindezüge (1a) am Werkzeugkopf (1) bzw. Schaft eingreift.

6. Rändelwerkzeug nach Anspruch 5, **gekennzeichnet durch** eine Vorspanneinrichtung (17) zum Drücken der Verstellschraube (16) in die Gewindezüge (1a) am Werkzeugkopf (1) bzw. Schaft (3).

7. Rändelwerkzeug nach einem der Ansprüche 1 bis 6, **dadurch gekennzeichnet, dass** am Werkzeugkopf (1) mindestens ein, vorzugsweise zwei Rändelräder (2) verstellbar gelagert sind.

8. Rändelwerkzeug nach Anspruch 7, **dadurch gekennzeichnet, dass** im Werkzeugkopf (1) mindestens ein quer zur Schaftachse (3a) verlaufender Schwenkbolzen (6) drehbar und einstellbar gelagert ist, an dem ein Rändelrad (2) um eine zur Achse (5) des Schwenkbolzens (6) geneigt verlaufende Achse (4) frei drehbar gelagert ist.

9. Rändelwerkzeug nach Anspruch 8, **dadurch gekennzeichnet, dass** die Achse (5) des bzw. der Schwenkbolzen(s) (6) senkrecht auf Verstellrichtung zwischen Werkzeugkopf (1) und Schaft (3) liegt.

## Claims

1. A knurling tool with a tool head (1) which carries at least one knurling wheel (2) and which is mounted adjustably on a shaft (3) and with a fixing device (18) for securing the relative position of the tool head (1) and the shaft (3), wherein the tool head (1) is mounted on the shaft (3) linearly displaceably transversely with respect to the axis (3a) of the shaft (3), **characterized in that** the fixing device (18) comprises at least one clamping eccentric (18) operating between the tool head (1) and the shaft (3).

2. A knurling tool as set forth in claim 1, **characterized in that** on both sides of an adjusting device (16) a, preferably essentially cylinder-like, clamping eccentric (18) is arranged in the adjustment direction.

3. A knurling tool as set forth in claim 1 or 2, **characterized in that** a dovetail guide (15) is provided for linear guidance of the tool head (1) on the shaft (3).

4. A knurling tool as set forth in claims 1 to 3, **characterized by** an adjusting device comprising an adjusting screw (16), preferably arranged in the adjustment direction, for adjusting the relative position of the tool head (1) and the shaft (3).

5. A knurling tool as set forth in claim 4, **characterized in that** the adjusting screw (16) is arranged rotatably but axially immovably in the shaft (3) or on the tool head, respectively, the adjusting screw engaging with its screw thread (16a) with the corresponding screw thread (1a) of the tool head (1) or the shaft, respectively.

6. A knurling tool as set forth in claim 5, **characterized by** a prestressing device (17) for pressing the adjusting screw (16) into the screw thread (1a) of the tool head (1) or the shaft (3), respectively.

7. A knurling tool as set forth in claims 1 to 6, **characterized in that** at least one, preferably two knurling wheel(s) (2) is (are) arranged adjustably on the tool head (1).

8. A knurling tool as set forth in claim 7, **characterized in that** there is at least one pivoting pin arranged rotatably and adjustably on the tool head (1), which extends transversely with respect to the axis of the shaft (3a) and on which a knurling wheel (2) is mounted freely rotatably around an axis (4) extending inclinedly with respect to the axis (5) of the pivoting pin (6).

9. A knurling tool as set forth in claim 8, **characterized in that** the axis (5) of the pivoting pin(s) (6) is perpendicular to the adjusting direction between the tool head (1) and the shaft (3).

## Revendications

1. Outil de moletage comprenant une tête d'outil (1) portant au moins une molette (2), qui est disposée sur un manche (3) de manière réglable, et comprenant un dispositif de fixation (18) pour fixer la position relative de la tête d'outil (1) et du manche (3), la tête d'outil (1) étant disposée sur le manche (3) transversalement à l'axe (3a) du manche de manière à pouvoir coulisser linéairement, **caractérisé en ce que** le dispositif de fixation (18) présente au moins un excentrique de serrage (18) agissant entre la tête d'outil (1) et le manche (3).

2. Outil de moletage selon la revendication 1, **caractérisé en ce qu'**un excentrique de serrage (18), de préférence essentiellement de forme cylindrique, s'étendant dans le sens du réglage, est disposé de chaque côté d'un dispositif de réglage (16).

3. Outil de moletage selon la revendication 1 ou 2, **caractérisé en ce qu'**un guidage en queue d'aronde (15) est prévu pour le guidage linéaire de la tête d'outil (1) sur le manche (3).

4. Outil de moletage selon l'une des revendications 1 à 3, **caractérisé par** un dispositif de réglage présentant une vis de réglage (16), s'étendant de préférence dans le sens du réglage, pour régler la position relative de la tête d'outil (1) et du manche (3).

5. Outil de moletage selon la revendication 4, **caractérisé en ce que** la vis de réglage (16) est disposée de manière à pouvoir tourner mais sans pouvoir coulisser axialement sur le manche (3) ou sur la tête d'outil, et **en ce qu'**elle s'engrène avec ses filets (16a) dans les filets (1a) correspondants sur la tête d'outil (1) ou sur le manche.

6. Outil de moletage selon la revendication 5, **caractérisé par** un dispositif de précontrainte (17) pour pousser la vis de réglage (16) dans les filets (1a) sur la tête d'outil (1) ou sur le manche (3).

7. Outil de moletage selon l'une des revendications 1 à 6, **caractérisé en ce qu'**au moins une, de préférence deux molettes (2) sont disposées de manière réglable sur la tête d'outil (1).

8. Outil de moletage selon la revendication 7, **caractérisé en ce qu'**au moins une broche d'inclinaison (6) s'étendant transversalement à l'axe (3a) du manche est disposée sur la tête d'outil (1) de manière rotative et réglable, sur laquelle une molette (2) est disposée de manière à pouvoir tourner librement autour d'un axe (4) incliné par rapport à l'axe (5) de la broche d'inclinaison (6).

9. Outil de moletage selon la revendication 8, **caractérisé en ce que** l'axe (5) de la ou des broches d'inclinaison (6) s'étend perpendiculairement à l'axe de réglage entre la tête d'outil (1) et le manche (3).
